(19) Europäisches Patentamt
European Patent Office
Office européen des brevets

(11) **EP 3 933 785 A2**

(12) **EUROPEAN PATENT APPLICATION**

(43) Date of publication:
05.01.2022 Bulletin 2022/01

(51) Int Cl.:
*G06T 19/00* (2011.01)   *G06T 17/05* (2011.01)

(21) Application number: 21203756.8

(22) Date of filing: 20.10.2021

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 21.12.2020   CN 202011517247

(71) Applicant: Apollo Intelligent Connectivity (Beijing)
Technology Co., Ltd.
Beijing 100176 (CN)

(72) Inventor: MA, Wei
Beijing 100085 (CN)

(74) Representative: V.O.
P.O. Box 87930
2508 DH Den Haag (NL)

(54) **METHOD AND APPARATUS FOR PROCESSING TRAJECTORY, ROADSIDE DEVICE AND CLOUD CONTROL PLATFORM**

(57)    The present disclosure discloses a method and apparatus for processing a trajectory, a roadside device, and a cloud control platform, relates to the field of intelligent transportation, and in particular to the field of computer vision. An implementation scheme is: acquiring a to-be-processed trajectory, the to-be-processed trajectory comprising at least three sequential position points; determining an auxiliary line based on the position points and a preset number of interpolation points; determining positions of the interpolation points based on the preset number of interpolation points; and determining and outputting a target trajectory based on the auxiliary line and the positions of the interpolation points.

Fig. 2

**Description**

TECHNICAL FIELD

The present disclosure relates to the field of intelligent transportation, in particular to the field of computer vision, and more particular to a method and apparatus for processing a trajectory, a roadside device and a cloud control platform.

BACKGROUND

With the development of intelligent networking technology, intelligent perception technology may recognize objects, and at the same time, it is required to use visualization technology to display recognition results in real time. However, the recognition results are discrete and discontinuous due to realistic issues such as a camera frequency and computing power of a recognition device. Since there is an inverse correlation between a recognition frame rate and a recognition result accuracy, it is necessary to find a balance point.

At present, a good situation is that the recognition frame rate may reach 10 Hz, that is, a recognition result is output 10 times per second. However, this frame rate is too low for a visualization scenario, which may cause jumping and swaying of objects visible to naked eyes when the recognition result is displayed in real time.

SUMMARY

The present disclosure provides a method and apparatus for processing a trajectory, a roadside device and a cloud control platform.

In a first aspect, an embodiment of the present disclosure provides a method for processing a trajectory, and the method comprises: acquiring a to-be-processed trajectory, the to-be-processed trajectory comprising at least three sequential position points; determining an auxiliary line based on the position points and a preset number of interpolation points; determining positions of the interpolation points based on the preset number of interpolation points; and determining and outputting a target trajectory based on the auxiliary line and the positions of the interpolation points.

In a second aspect, an embodiment of the present disclosure provides an apparatus for processing a trajectory, and the apparatus comprises: an acquisition unit, configured to acquire a to-be-processed trajectory, the to-be-processed trajectory comprising at least three sequential position points; an auxiliary line determination unit, configured to determine an auxiliary line based on the position points and a preset number of interpolation points; an interpolation point position determination unit, configured to determine positions of the interpolation points based on the preset number of interpolation points; and a target trajectory determination unit, configured to determine and output a target trajectory based on the auxiliary line and the positions of the interpolation points.

In a third aspect, an embodiment of the present disclosure provides an electronic device, and the electronic device comprises: at least one processor; and a memory communicatively connected with the at least one processor, where the memory stores instructions executable by the at least one processor, and the instructions, when executed by the at least one processor, cause the at least one processor to execute the method for processing a trajectory as described in any one of the implementations of the first aspect.

In a forth aspect, an embodiment of the present disclosure provides a non-transitory computer readable storage medium storing computer instructions, where the computer instructions cause a computer to execute the method for processing a trajectory as described in any one of the implementations of the first aspect.

In a fifth aspect, an embodiment of the present disclosure provides a roadside device comprising the electronic device as described in any one of the implementations of the third aspect.

In a sixth aspect, an embodiment of the present disclosure provides a cloud control platform comprising the electronic device as described in any one of the implementations of the third aspect.

In a seventh aspect, an embodiment of the present disclosure provides a computer program product comprising a computer program, where the computer program, when executed by a processor, implements the method for processing a trajectory as described in any one of the implementations of the first aspect.

The technology according to the present disclosure solves the current problem of jumping and swaying of objects visible to naked eyes when displaying a recognition result in real time, by accurately acquiring the position points of the to-be-processed trajectory in an object traveling process, and interpolating the acquired position points through a starting point of the selected position points, it takes into account a speed factor, is compatible with a turning situation, and may accurately simulate an actual motion trajectory and an instantaneous direction of the object, so that a visualized result is smooth, continuous and close to reality.

It should be understood that the content described in this section is not intended to identify key or important features of the embodiments of the present disclosure, nor is it intended to limit the scope of the present disclosure. Other features of the present disclosure will be easily understood by the following description.

BRIEF DESCRIPTION OF THE DRAWINGS

The accompanying drawings are used to better understand the present solution, and do not constitute a limitation to the present disclosure, in which:

Fig. 1 is an exemplary system architecture diagram to which an embodiment of the present disclosure may be implemented;

Fig. 2 is a flowchart of an embodiment of a method for processing a trajectory according to the present disclosure;

Fig. 3 is a schematic diagram of an application scenario of the method for processing a trajectory according to the present disclosure;

Fig. 4 is a flowchart of another embodiment of the method for processing a trajectory according to the present disclosure;

Fig. 5 is a schematic structural diagram of an embodiment of an apparatus for processing a trajectory according to the present disclosure; and

Fig. 6 is a block diagram of an electronic device used to implement the method for processing a trajectory according to an embodiment of the present disclosure.

DETAILED DESCRIPTION OF EMBODIMENTS

The following describes exemplary embodiments of the present disclosure in conjunction with the accompanying drawings, which comprises various details of the embodiments of the present disclosure to facilitate understanding, and they should be considered as merely exemplary. Therefore, those of ordinary skills in the art should recognize that various changes and modifications may be made to the embodiments described herein without departing from the scope and spirit of the present disclosure. Also, for clarity and conciseness, descriptions of well-known functions and structures are omitted in the following description.

It should be noted that the embodiments in the present disclosure and the features in the embodiments may be combined with each other on a non-conflict basis. The present disclosure will be described below in detail with reference to the accompanying drawings and in combination with the embodiments.

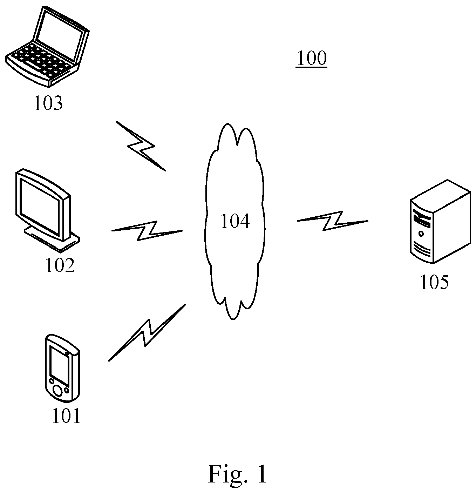

Fig. 1 shows an exemplary system architecture 100 to which an embodiment of a method for processing a trajectory or an apparatus for processing a trajectory of the present disclosure may be implemented.

As shown in Fig. 1, the system architecture 100 may comprise terminal devices 101, 102, 103, a network 104 and a server 105. The network 104 is used to provide a communication link medium between the terminal devices 101, 102, 103 and the server 105. The network 104 may comprise various types of connections, such as wired, wireless communication links, or optic fibers.

A user may use the terminal devices 101, 102, 103 to interact with the server 105 through the network 104 to receive or send messages, and so on. Various communication client applications, such as trajectory processing applications, may be installed on the terminal devices 101, 102, and 103.

The terminal devices 101, 102, and 103 may be hardware or software. When the terminal devices 101, 102, 103 are hardware, they may be various electronic devices, comprising but not limited to smart phones, tablet computers, car computers, laptop computers, desktop computers, and so on. When the terminal devices 101, 102, 103 are software, they may be installed in the electronic devices listed above. They may be implemented as a plurality of software or software modules, or as a single software or software module, which is not limited herein.

The server 105 may be a server that provides various services, for example, a backend server that processes a to-be-processed trajectory acquired by the terminal devices 101, 102, and 103. The backend server may acquire the to-be-processed trajectory sent by the terminal devices 101, 102, and 103, the to-be-processed trajectory comprising at least three sequential position points; determine an auxiliary line based on the position points and a preset number of interpolation points; determine positions of the interpolation points based on the preset number of interpolation points; and determine and output a target trajectory based on the auxiliary line and the positions of the interpolation points.

It should be noted that the server 105 may be hardware or software. When the server 105 is hardware, it may be implemented as a distributed server cluster composed of a plurality of servers, or as a single server. When the server 105 is software, it may be implemented as a plurality of software or software modules, or may be implemented as a single software or software module, which is no limited herein.

It should be noted that the method for processing a trajectory provided by the embodiments of the present disclosure is generally performed by the server 105. Correspondingly, the apparatus for processing a trajectory is generally provided in the server 105.

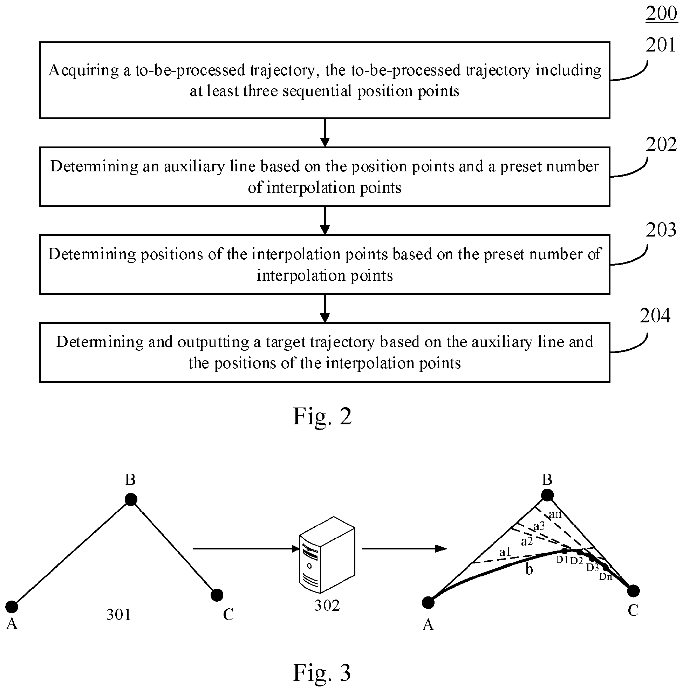

With further reference to Fig. 2, illustrating a flow 200 of an embodiment of a method for processing a trajectory according to the present disclosure. The method for processing a trajectory of the present embodiment comprises the following steps:

Step 201, acquiring a to-be-processed trajectory, the to-be-processed trajectory comprising at least three sequential position points.

In the present embodiment, an executing body of the method for processing a trajectory (for example, the server 105 in Fig. 1) may acquire the to-be-processed trajectory acquired and uploaded by a roadside device through a wired connection or a wireless connection. Alternatively, the executing body may also acquire the to-be-processed trajectory composed of the position points (GPS points) on a target road section actively sent by an object (such as a vehicle) through a wired connection or a wireless connection. The to-be-processed trajectory may be a broken line or a curve, and a line type of the to-be-processed trajectory is not limited in the present disclosure. The to-be-processed trajectory comprises at least three sequential position points (GPS points). The position points may be points where an object (such as a vehicle) has located at a certain position.

Step 202, determining an auxiliary line based on the position points and a preset number of interpolation points.

After acquiring the at least three sequential position points on the to-be-processed trajectory, the executing body may determine the auxiliary line based on the position points and the preset number of interpolation points. The interpolation points may be points that are interpolated in a triangular space (comprising an edge line of the triangular space) formed by three sequential position points. The executing body may connect the position points in sequence to obtain connecting lines; based on the connecting lines and the preset number of interpolation points, the auxiliary line is made between the connecting lines. The auxiliary line is a straight line. Based on the preset number of interpolation points and a scale factor actually required (the scale factor may be a ratio of dividing the connection lines, a final value of the scale factor may be 1), the executing body may divide the connecting lines into the preset number of interpolation points plus one line segment, and then determine the auxiliary line based on the obtained line segment. For example, there are three sequential position points on the to-be-processed trajectory, which are P0, P1, and P2 in sequence respectively. Connect P0 and P1 to obtain a line segment P0P1, connect P1 and P2 to obtain a line segment P1P2, and then based on the preset number of interpolation points, such as 2, segmentation points on the line segment P0P1 corresponding to the interpolation points are respectively A and B, and actual required scale factors corresponding to A and B may be 0.58 and 0.95. Starting from the point P0, positions of the point A and the point B are respectively determined by P0A=0.58P0P1, P1B=0.95P0P1. Positions of segmentation points C and D corresponding to the interpolation points on the line segment P1P2 are determined in the same method, and detailed description thereof will be omitted. Starting from the point P1, the positions of the point C and the point D are respectively determined by P1C=0.58P1P2, P1D=0.95P1P2. Then, the auxiliary line may be a line segment AC and a line segment BD. The present disclosure does not limit the number of interpolation points, does not limit a value of the scale factor, and does not limit the number of auxiliary lines.

Step 203, determining positions of the interpolation points based on the preset number of interpolation points.

After determining the preset number of interpolation points, the executing body may determine the positions of the interpolation points based on the preset number of interpolation points. After determining the auxiliary line, the executing body may determine the positions of the interpolation points based on the preset number of interpolation points and the auxiliary line. The executing body may determine the scale factor based on the number of interpolation points; and determine the positions of the interpolation points based on the scale factor and auxiliary line. The positions of the interpolation points are on the auxiliary line. For example, when the auxiliary line is AC, the scale factor in this regard is 0.58, then a position of an interpolation point E may be AE=0.58AC, when the auxiliary line is BD, the scale factor in this regard is 0.95, then a position of an interpolation point F may be BF=0.95BD.

Step 204, determining and outputting a target trajectory based on the auxiliary line and the positions of the interpolation points.

After determining the auxiliary line and the positions of the interpolation points, the executing body may determine and output the target trajectory based on the auxiliary line and the positions of the interpolation points. The executing body may use the auxiliary line as a tangent line of the target trajectory, the interpolation points of the determined positions as tangent points, connect the interpolation points to obtain the target trajectory, and may visually output the target trajectory through a three-dimensional simulation display.

With further reference to Fig. 3, illustrating a schematic diagram of an application scenario of the method for processing a trajectory according to the present disclosure. In the application scenario of Fig. 3, a server 302 acquires a to-be-processed trajectory 301, and the to-be-processed trajectory 301 comprises at least three sequential position points A, B, and C. The server 302 determines auxiliary lines a1, a2, a3,..., an based on the position points A, B, and C and a preset number of interpolation points D1, D2, D3,..., Dn. The server 302 determines positions of the interpolation points D1, D2, D3,..., Dn based on the preset number of interpolation points D1, D2, D3,..., Dn. The server 302 determines and outputs a target trajectory b based on the auxiliary lines a1, a2, a3, ..., an and the positions of the interpolation points D1, D2, D3, ..., Dn.

The present embodiment accurately acquires the position points of the to-be-processed trajectory in an object traveling process, and interpolates the acquired position points through a starting point of the selected position points, taking into account a speed factor, is compatible with a turning situation, and may accurately simulate an actual motion trajectory and an instantaneous direction of the object, so that a visualized result is smooth, continuous and close to reality.

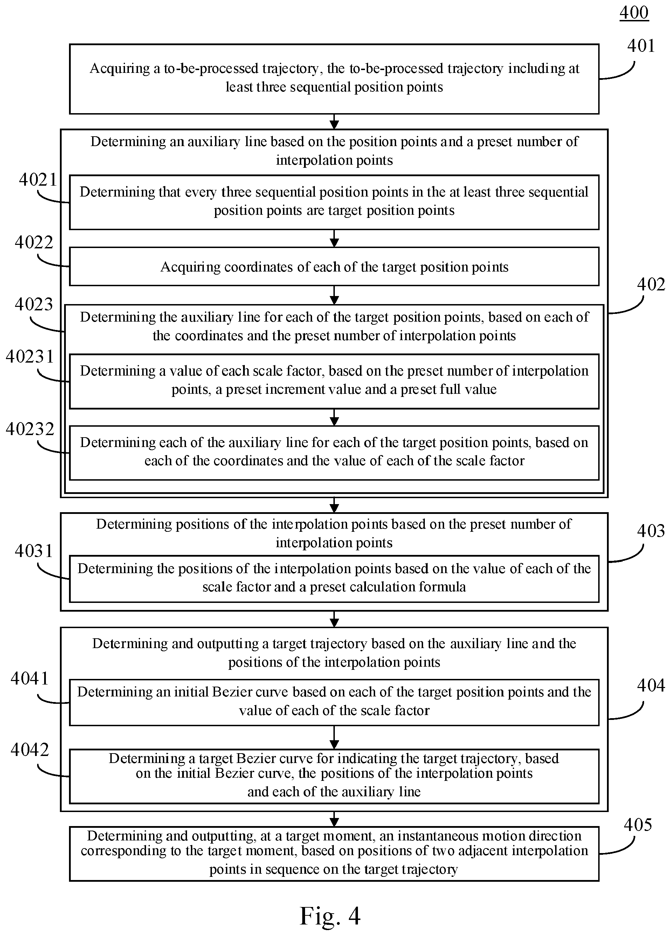

With further reference to Fig. 4, illustrating a flow 400 of another embodiment of the method for processing a trajectory according to the present disclosure. As shown in Fig. 4, the method for processing a trajectory of the present embodiment may comprise the following steps:

Step 401, acquiring a to-be-processed trajectory, the to-be-processed trajectory comprising at least three sequential position points.

Step 402, determining an auxiliary line based on the position points and a preset number of interpolation points.

The principles of step 401 to step 402 are similar to the principles of step 201 to step 202, and detailed description thereof will be omitted.

Particularly, step 402 may also be implemented through step 4021 to step 4023:

Step 4021, determining every three sequential position points in the at least three sequential position points as target position points.

After acquiring the at least three sequential position points in the to-be-processed trajectory, the executing body may determine every three sequential position points therein as the to-be-processed target position points. The target position points may be actively acquired by the executing body, or may be actively uploaded by an object (such as a vehicle) through a positioning device, which is not limited in the present disclosure.

Step 4022, acquiring coordinates of each of the target position points.

After determining the target position points, the executing body may acquire the coordinates of each of the target position points, and may also acquire information such as an orientation of each of the target position points. The coordinates and the orientation information may be actively sent by the positioning device on the object (such as a vehicle), or may be sent to the executing body after being acquired by a roadside device, which is not limited in the present disclosure. The roadside device may acquire information such as an object category (for example, a vehicle or a pedestrian or an animal), an object event (for example, a collision, red light running, etc.), a location and orientation, and send to the executing body.

Step 4023, determining the auxiliary line for each of the target position points, based on each of the coordinates and the preset number of interpolation points.

After acquiring the coordinates of each of the target position points, the executing body may determine the auxiliary line for each of the target position points based on each of the coordinates and the preset number of interpolation points. Taking three sequential position points on the to-be-processed trajectory, which are P0, P1, and P2 respectively as an example. After acquiring the coordinates of each of the target position points, the executing body may first use the point P0 as a tangent point and a line POP1 as a tangent line, determine an arc 1 passing the point P0, and then the executing body may use the point P2 as a tangent point and a line P2P1 as a tangent line, determine an arc 2 passing the point P2, the arc 1 and the arc 2 intersect at a point O. Based on the preset number of interpolation points, interpolation points are set near the point O. An arc 3 of each interpolation point is made through the point O. The arc 3 is an arc that smoothly connects the interpolation points. A radian of the arc 3 (it may also be an interval and positions of the interpolation points) depends on the actual situation, which may be the same as a radian of the arc 1, or may be the same as a radian of the arc 2, or may also be between the radian of the arc 1 and the radian of the arc 2, which is not limited in the present disclosure. In addition, the arc 3 is translated upward or downward, so that the arc 3 is smoothly connected with the arc 1 and the arc 2, and the arc 3 is the auxiliary line for each of the target position points.

In the present embodiment, the target position points of the object are accurately acquired, which pass a starting point and an end point of the target position points, the starting point and the end point are respectively used as the tangent points to make the arc, and an intersection position of the arcs is interpolated to achieve an effect of smooth transition at the intersection position of the arcs, it takes into account a speed factor, is compatible with a turning situation, and may accurately simulate an actual motion trajectory and an instantaneous direction of the object.

Particularly, step 4023 may also be implemented through step 40231 to step 40232:

Step 40231, determining a value of each scale factor, based on the preset number of interpolation points, a preset increment value and a preset full value.

After determining the preset number of interpolation points, the preset increment value and the preset full value, the executing body may determine the value of each of the scale factor, based on the preset number of interpolation points, the preset increment value and the preset full value. The executing body may determine that the preset increment value is an average increment of the preset full value based on the preset number of interpolation points to obtain the preset increment value. The value of each of the scale factor is determined based on the preset increment value and the number of interpolation points, and the value of each of the scale factor does not exceed the preset full value. For example, the preset number of interpolation points is 3, and the preset full value is unit 1. The preset increment value is 0.25. The determined values of the scale factors are 0.25, 0.5, and 0.75, respectively. The present disclosure does not limit the preset increment value, and does not limit the number of interpolation points.

Step 40232, determining each of the auxiliary line for each of the target position points, based on each of the coordinates and the value of each of the scale factor.

After obtaining the value of each of the scale factor, the executing body may determine each of the auxiliary line for each of the target position points based on the coordinates of each of the target position points and the value of each of the scale factor. The auxiliary line is determined based on each scale factor obtained from the average increment of the preset full value based on the preset number of interpolation points. For example, the target position points are P0, P1, and P2. Segmentation points on P0P1 based on the determined scale factors of 0.25, 0.5, and 0.75 are A, B, and C, respectively. P0A=0.25P0P1, P0B=0.5P0P1, and POC=0.75POP1. Segmentation points on P1P2 based on the determined scale factors of 0.25, 0.5, and 0.75 are D, E, and F respectively. P1D=0.25P1P2, P1E=0.5P1P2, and P1F=0.75P1P2. Then, the auxiliary line for each of the target position points may be obtained as AD, BE, and CF respectively.

In the present embodiment, each of the auxiliary line for each of the target position points is determined based on the coordinates of each of the target position points and the determined value of each of the scale factor, so that the actual motion trajectory and the instantaneous direction of the object may be accurately simulated based on the determined auxiliary line.

Step 403, determining positions of the interpolation points based on the preset number of interpolation points.

The principle of step 403 is similar to the principle of step 203, and detailed description thereof will be omitted.

Particularly, step 403 may also be implemented through step 4031:

Step 4031, determining the positions of the interpolation points based on the value of each of the scale factor and a preset calculation formula.

After determining the value of each of the scale factor and the auxiliary line, the executing body may determine the positions of the interpolation points based on the value of each of the scale factor and the preset calculation formula. The executing body may respectively substitute the value of each of the scale factor into the preset calculation formula for calculation to obtain the positions of the interpolation points. Then, the executing body may verify whether the position of each interpolation point is on the corresponding auxiliary line, and if there is an interpolation point that is not on the corresponding auxiliary line, the executing body may translate the corresponding auxiliary line to the interpolation point in parallel. The preset calculation formula may be a quadratic Bezier curve formula (1):

$$B (t) = (1-t) 2P0+2t (1-t) P1+t2P2, \quad t \in [0, 1] \quad (1)$$

here, t is the scale factor, P0, P1, and P2 are the coordinates of three sequential target position points on the to-be-processed trajectory, and B(t) is the coordinates of the interpolation point.

In the present embodiment, the auxiliary line may be determined by the scale factor t in the formula (1). For example, the segmentation point on the line segment POP1 in this regard is A, P0A=tP0P1, and the segmentation point on the line segment P1P2 in this regard is B, P1B=tP1P2, and the auxiliary line in this regard may be expressed as AB. It may be understood that the interpolation point B(t) in this regard may be on the auxiliary line AB or not, which is not limited in the present disclosure. The auxiliary line AB may translate up, down, left, and right. When the interpolation point B(t) is not on the auxiliary line AB in this regard, the auxiliary line AB may be translated in parallel to make B(t) on the auxiliary line AB in this regard, so that the auxiliary line AB in this regard may be used as a tangent line of the quadratic Bezier curve at the interpolation point B(t), so as to accurately determine a target trajectory of the object based on the tangent line.

In the present embodiment, the positions of the interpolation points are determined based on the value of each of the scale factor and the preset calculation formula, the coordinates of the interpolation points may be determined more accurately, so that based on the accurately determined coordinates of the interpolation points, it is compatible with a turning situation, and the target trajectory of the object may be accurately determined.

Step 404, determining and outputting a target trajectory based on the auxiliary line and the positions of the interpolation points.

The principle of step 404 is similar to the principle of step 204, and detailed description thereof will be omitted.

Particularly, step 404 may also be implemented through step 4041 to step 4042:

Step 4041, determining an initial Bezier curve based on each of the target position points and the value of each of the scale factor.

After determining each of the target position points and the value of each of the scale factor, the executing body may determine the initial Bezier curve based on each of the target position points and the value of each of the scale factor. Based on the coordinates of each of the target position points and a value of a first scale factor t (the smallest scale factor) in the scale factors, the executing body may substitute the value of the first scale factor t into the formula (1) to obtain a first interpolation point, and then the executing body may determine the initial Bezier curve based on an initial one of the target position points and the first interpolation point, according to a preset quadratic Bezier curve determination rule.

Step 4042, determining a target Bezier curve for indicating the target trajectory, based on the initial Bezier curve, the positions of the interpolation points and each of the auxiliary line.

After determining the initial Bezier curve, the executing body may determine the target Bezier curve for indicating the target trajectory, based on the initial Bezier curve, the positions of the interpolation points and each of the auxiliary line. After determining to translate each of the auxiliary line parallel to the position of the corresponding interpolation point, the executing body may use each of the auxiliary line as a tangent line at the corresponding interpolation point, based on the initial Bezier curve, the positions of the interpolation points and the tangent line at each interpolation point, according to the preset quadratic Bezier curve determination rule, determine the target Bezier curve for indicating the target trajectory.

In the present embodiment, each of the auxiliary line is translated parallel to the corresponding interpolation point as the tangent line of the Bezier curve at the corresponding interpolation point, thereby providing accurate guidance for determining the target Bezier curve for indicating the target trajectory, it may accurately simulate an actual motion trajectory and an instantaneous direction of the object, so that a visualized result is smooth, continuous and close to reality.

Step 405, determining and outputting, at a target moment, an instantaneous motion direction corresponding to the target moment, based on positions of two adjacent interpolation points in sequence on the target trajectory.

After determining the target trajectory, the executing body may determine and output the instantaneous motion direction corresponding to the target moment, based on the target moment specified by the user, at the target moment, based on the positions of the two adjacent interpolation points in sequence on the target trajectory. At the target moment, a position distance of the two adjacent interpolation points in sequence on the target trajectory is less than a preset threshold, thus may represent a very small time difference, and the two adjacent interpolation points may be interpolation points corresponding to two moments having a minimum time difference, so as to be able to represent the instantaneous motion direction at the target moment. The executing body may determine the instantaneous motion direction corresponding to the target moment by calculating an angle between a connecting line of the two adjacent interpolation points and a horizontal direction, and display the instantaneous motion direction through a three-dimensional simulation display. An arrow may be used to display the instantaneous motion direction. For the instantaneous motion direction, the present disclosure does not limit a display form of the instantaneous motion direction.

In the present embodiment, the instantaneous motion direction corresponding to the target moment may be determined accurately based on the positions of two adjacent interpolation points in sequence on the target trajectory, it is compatible with a turning situation, making a visualized result smooth, continuous and close to reality.

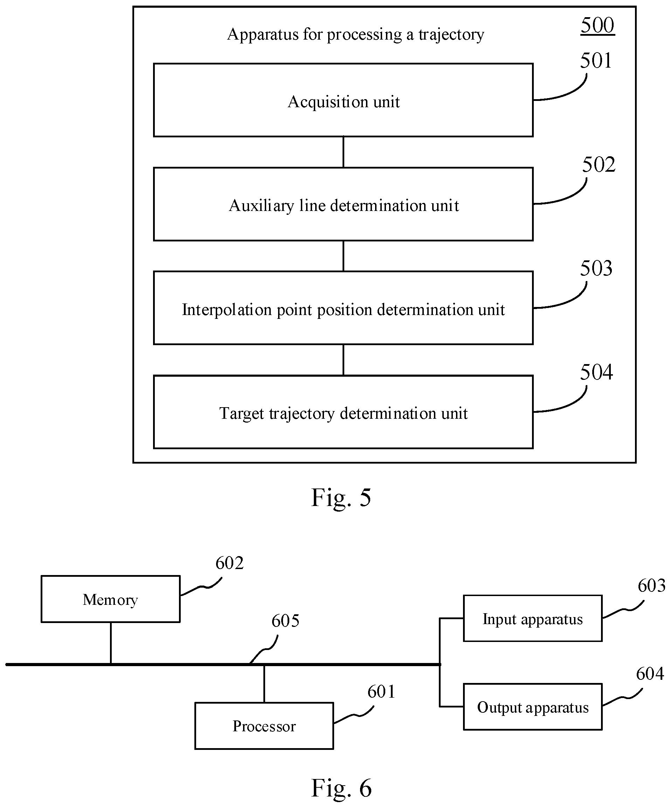

With further reference to Fig. 5, as an implementation of the method shown in the above figures, the present disclosure provides an embodiment of an apparatus for processing a trajectory. The apparatus embodiment corresponds to the method embodiment as shown in Fig. 2. The apparatus may be applied to various electronic devices.

As shown in Fig. 5, an apparatus 500 for processing a trajectory of the present embodiment comprises: an acquisition unit 501, an auxiliary line determination unit 502, an interpolation point position determination unit 503 and a target trajectory determination unit 504.

The acquisition unit 501 is configured to acquire a to-be-processed trajectory, the to-be-processed trajectory comprising at least three sequential position points.

The auxiliary line determination unit 502 is configured to determine an auxiliary line based on the position points and a preset number of interpolation points.

The interpolation point position determination unit 503 is configured to determine positions of the interpolation points based on the preset number of interpolation points.

The target trajectory determination unit 504 is configured to determine and output a target trajectory based on the auxiliary line and the positions of the interpolation points.

In some alternative implementations of the present embodiment, the auxiliary line determination unit 502 is further configured to: determine every three sequential position points in the at least three sequential position points as target position points; acquire coordinates of each of the target position points; and determine the auxiliary line for each of the target position points, based on each of the coordinates and the preset number of interpolation points.

In some alternative implementations of the present embodiment, the auxiliary line determination unit 502 is further configured to: determine a value of each scale factor, based on the preset number of interpolation points, a preset increment value and a preset full value; and determine each of the auxiliary line for each of the target position points, based on each of the coordinates and the value of each of the scale factor.

In some alternative implementations of the present embodiment, the interpolation point position determination unit 503 is further configured to: determine the positions of the interpolation points based on the value of each of the scale factor and a preset calculation formula.

In some alternative implementations of the present embodiment, the target trajectory determination unit 504 is further configured to: determine an initial Bezier curve based on each of the target position points and the value of each of the scale factor; and determine a target Bezier curve for indicating the target trajectory, based on the initial Bezier curve, the positions of the interpolation points and each of the auxiliary line.

In some alternative implementations of the present embodiment, the apparatus for processing a trajectory further comprises an instantaneous motion direction determination unit not shown in Fig. 5, configured to determine and output, at a target moment, an instantaneous motion direction corresponding to the target moment based on positions of two adjacent interpolation points in sequence on the target trajectory.

It should be understood that the units 501 to 504 recorded in the apparatus 500 for processing a trajectory correspond to the steps in the method described with reference to Fig. 2 respectively. Therefore, the operations and features described above for the method for processing a trajectory are also applicable to the apparatus 500 and the units contained therein, and detailed description thereof will be omitted.

According to an embodiment of the present disclosure, the present disclosure also provides an electronic device for processing a trajectory, a readable storage medium, a roadside device, a cloud control platform, and a computer program product.

As shown in Fig. 6, is a block diagram of an electronic device of the method for processing a trajectory according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 6, the electronic device comprises: one or more processors 601, a memory 602, and interfaces for connecting various components, comprising high-speed interfaces and low-speed interfaces. The various components are connected to each other using different buses 605, and may be installed on a common motherboard or in other methods as needed. The processor may process instructions executed within the electronic device, comprising instructions stored in or on the memory to display graphic information of GUI on an external input/output apparatus (such as a display device coupled to the interface). In other embodiments, a plurality of processors and/or a plurality of buses 605 may be used together with a plurality of memories and a plurality of memories if desired. Similarly, a plurality of electronic devices may be connected, and the devices provide some necessary operations (for example, as a server array, a set of blade servers, or a multi-processor system). In Fig. 6, one processor 601 is used as an example.

The memory 602 is a non-transitory computer readable storage medium provided by the present disclosure. The memory stores instructions executable by at least one processor, so that the at least one processor performs the method for processing a trajectory provided by the present disclosure. The non-transitory computer readable storage medium of the present disclosure stores computer instructions for causing a computer to perform the method for processing a trajectory provided by the present disclosure.

The memory 602, as a non-transitory computer readable storage medium, may be used to store non-transitory software programs, non-transitory computer executable programs and units, such as program instructions/units corresponding to the method for processing a trajectory in the embodiments of the present disclosure (for example, the acquisition unit 501, the auxiliary line determination unit 502, the interpolation point position determination unit 503 and the target trajectory determination unit 504 as shown in Fig. 5). The processor 601 executes the non-transitory software programs, instructions, and modules stored in the memory 602 to execute various functional applications and data processing of the server, that is, to implement the method for processing a trajectory in the foregoing method embodiments.

The memory 602 may comprise a storage program area and a storage data area, where the storage program area may store an operating system and an application program required by at least one function; and the storage data area may store such as data created by the use of the electronic device for processing a trajectory. In addition, the memory 602 may comprise a high-speed random access memory, and may also comprise a non-transitory memory, such as at least one magnetic disk storage device, a flash memory or other non-transitory solid state storage devices. In some embodiments, the memory 602 may optionally comprise a memory disposed remotely relative to processor 601, which may be connected through a network to the electronic device for processing a trajectory. Examples of such networks comprise, but are not limited to, the Internet, enterprise intranets, local area networks, mobile communication networks and combinations thereof.

The electronic device of the method for processing a trajectory may also comprise: an input apparatus 603 and an output apparatus 604. The processor 601, the memory 602, the input apparatus 603 and the output apparatus 604 may be connected through the bus 605 or in other ways, and an example of the connection through the bus 605 is shown in Fig. 6.

The input apparatus 603 may receive input digital or character information, and generate key signal inputs related to user settings and function control of the electronic device of the method for processing a trajectory, such as touch screen, keypad, mouse, trackpad, touchpad, pointing stick, one or more mouse buttons, trackball, joystick and other input apparatuses. The output apparatus 604 may comprise a display device, an auxiliary lighting apparatus (for example, LED), a tactile feedback apparatus (for example, a vibration motor), and the like. The display device may comprise, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may comprise: being implemented in one or more computer programs that may be executed and/or interpreted on a programmable system that comprises at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

The present disclosure also provides a computer program product, comprising a computer program, the computer program, when executed by a processor, implements the method for processing a trajectory according to the foregoing embodiment.

These computing programs (also referred to as programs, software, software applications, or codes) comprise machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, comprising machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (comprising acoustic input, voice input, or tactile input) may be used to receive input from the user.

The systems and technologies described herein may be implemented in a computing system that comprises backend components (e.g., as a data server), or a computing system that comprises middleware components (e.g., application server), or a computing system that comprises frontend components (for example, a user computer having a graphical user interface or a web browser, through which the user may interact with the implementations of the systems and the technologies described herein), or a computing system that comprises any combination of such backend components, middleware components, or frontend components. The components of the system may be interconnected by any form or medium of digital data communication (e.g., communication network). Examples of the communication network comprise: local area networks (LAN), wide area networks (WAN), the Internet, and blockchain networks.

The computer system may comprise a client and a server. The client and the server are generally far from each other and usually interact through the communication network. The relationship between the client and the server is generated by computer programs that run on the corresponding computer and have a client-server relationship with each other.

The present disclosure also provides a roadside device, comprising the above electronic device for processing a trajectory. In addition to the electronic device, the roadside device may also comprise communication components, etc. The electronic device may be integrated with the communication components, or may be provided separately. The electronic device may acquire data from sensing devices (such as cameras, radars) to obtain trajectory data for calculation.

The present disclosure also provides a cloud control platform, comprising the above electronic device for processing a trajectory. The cloud control platform performs processing in the cloud. The electronic device comprised in the cloud control platform may acquire data from sensing devices (such as cameras, radars) to obtain trajectory data for calculation; the cloud control platform may also be called a vehicle-road collaborative management platform, an edge computing platform, a cloud computing platform, a central system, etc.

According to the technical solution of the present disclosure, by accurately acquiring the position points of the to-be-processed trajectory in an object traveling process, and interpolating the acquired position points through a starting point of the selected position points, the technical solution takes into account a speed factor, is compatible with a turning situation, and may accurately simulate an actual motion trajectory and an instantaneous direction of the object, so that a visualized result is smooth, continuous and close to reality.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure may be achieved, no limitation is made herein.

The above particular embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be comprised in the protection scope of the present disclosure.

**Claims**

1. A method for processing a trajectory, the method comprising:

   acquiring (201, 401) a to-be-processed trajectory, the to-be-processed trajectory comprising at least three sequential position points;
   determining (202, 402) an auxiliary line based on the position points and a preset number of interpolation points;
   determining (203, 403) positions of the interpolation points based on the preset number of interpolation points; and
   determining (204, 404) and outputting a target trajectory based on the auxiliary line and the positions of the interpolation points.

2. The method according to claim 1, wherein the determining (202, 402) an auxiliary line comprises:

   determining (4021) every three sequential position points in the at least three sequential position points as target position points;
   acquiring (4022) coordinates of each of the target position points; and
   determining (4023) the auxiliary line for each of the target position points, based on each of the coordinates and the preset number of interpolation points.

3. The method according to claim 2, wherein the determining (4023) the auxiliary line for each of the target position points comprises:

   determining (40231) a value of each scale factor, based on the preset number of interpolation points, a preset increment value and a preset full value; and
   determining (40232) each of the auxiliary line for each of the target position points, based on each of the coordinates and the value of each of the scale factor.

4. The method according to claim 3, wherein the determining (203, 403) positions of the interpolation points comprises:

   determining (4031) the positions of the interpolation points based on the value of each of the scale factor and a preset calculation formula.

5. The method according to claim 3 or 4, wherein the determining (204, 404) and outputting a target trajectory comprises:

   determining (4041) an initial Bezier curve based on each of the target position points and the value of each of the scale factor; and
   determining (4042) a target Bezier curve for indicating the target trajectory, based on the initial Bezier curve, the positions of the interpolation points and each of the auxiliary line.

6. The method according to any one of claims 1-5, wherein the method further comprises:
   determining (405) and outputting, at a target moment, an instantaneous motion direction corresponding to the target moment, based on positions of two adjacent interpolation points in sequence on the target trajectory.

7. An apparatus for processing a trajectory, the apparatus comprising:

an acquisition unit (501), configured to acquire a to-be-processed trajectory, the to-be-processed trajectory comprising at least three sequential position points;

an auxiliary line determination unit (502), configured to determine an auxiliary line based on the position points and a preset number of interpolation points;

an interpolation point position determination unit (503), configured to determine positions of the interpolation points based on the preset number of interpolation points; and

a target trajectory determination unit (504), configured to determine and output a target trajectory based on the auxiliary line and the positions of the interpolation points.

8. The apparatus according to claim 7, wherein the auxiliary line determination unit (502) is further configured to:

determine every three sequential position points in the at least three sequential position points as target position points;

acquire coordinates of each of the target position points; and

determine the auxiliary line for each of the target position points, based on each of the coordinates and the preset number of interpolation points.

9. The apparatus according to claim 8, wherein the auxiliary line determination unit (502) is further configured to:

determine a value of each scale factor, based on the preset number of interpolation points, a preset increment value and a preset full value; and

determine each of the auxiliary line for each of the target position points, based on each of the coordinates and the value of each of the scale factor.

10. The apparatus according to claim 9, wherein the interpolation point position determination unit (503) is further configured to:

determine the positions of the interpolation points based on the value of each of the scale factor and a preset calculation formula.

11. An electronic device for processing a trajectory, comprising:

at least one processor (601); and

a memory (602), communicatively connected to the at least one processor (601); wherein,

the memory (602), storing instructions executable by the at least one processor (601), the instructions, when executed by the at least one processor (601), cause the at least one processor (601) to perform the method according to any one of claims 1-6.

12. A non-transitory computer readable storage medium, storing computer instructions, the computer instructions, being used to cause the computer to perform the method according to any one of claims 1-6.

13. A roadside device, comprising the electronic device according to claim 11.

14. A cloud control platform, comprising the electronic device according to claim 11.

15. A computer program product, comprising a computer program, the computer program, when executed by a processor, implements the method according to any one of claims 1-6.

100

103

104

102

105

101

Fig. 1

<u>200</u>

201

Acquiring a to-be-processed trajectory, the to-be-processed trajectory including at least three sequential position points

202

Determining an auxiliary line based on the position points and a preset number of interpolation points

203

Determining positions of the interpolation points based on the preset number of interpolation points

204

Determining and outputting a target trajectory based on the auxiliary line and the positions of the interpolation points

Fig. 2

B

A          301          C          302          A          C

Fig. 3

400

401

Acquiring a to-be-processed trajectory, the to-be-processed trajectory including at least three sequential position points

Determining an auxiliary line based on the position points and a preset number of interpolation points

4021

Determining that every three sequential position points in the at least three sequential position points are target position points

4022

Acquiring coordinates of each of the target position points

402

4023

Determining the auxiliary line for each of the target position points, based on each of the coordinates and the preset number of interpolation points

40231

Determining a value of each scale factor, based on the preset number of interpolation points, a preset increment value and a preset full value

40232

Determining each of the auxiliary line for each of the target position points, based on each of the coordinates and the value of each of the scale factor

Determining positions of the interpolation points based on the preset number of interpolation points

403

4031

Determining the positions of the interpolation points based on the value of each of the scale factor and a preset calculation formula

Determining and outputting a target trajectory based on the auxiliary line and the positions of the interpolation points

4041

Determining an initial Bezier curve based on each of the target position points and the value of each of the scale factor

404

4042

Determining a target Bezier curve for indicating the target trajectory, based on the initial Bezier curve, the positions of the interpolation points and each of the auxiliary line

405

Determining and outputting, at a target moment, an instantaneous motion direction corresponding to the target moment, based on positions of two adjacent interpolation points in sequence on the target trajectory

Fig. 4

```
┌─────────────────────────────────────────────────────────────┐
│           Apparatus for processing a trajectory      500     │
│   ┌─────────────────────────────────────────────┐  501       │
│   │             Acquisition unit                 │            │
│   └─────────────────────────────────────────────┘            │
│                                                              │
│   ┌─────────────────────────────────────────────┐  502       │
│   │       Auxiliary line determination unit      │            │
│   └─────────────────────────────────────────────┘            │
│                                                              │
│   ┌─────────────────────────────────────────────┐  503       │
│   │ Interpolation point position determination unit│          │
│   └─────────────────────────────────────────────┘            │
│                                                              │
│   ┌─────────────────────────────────────────────┐  504       │
│   │     Target trajectory determination unit     │            │
│   └─────────────────────────────────────────────┘            │
└─────────────────────────────────────────────────────────────┘
```

Fig. 5

```
┌──────────┐                              ┌──────────────────┐
│  Memory  │  602                    603  │ Input apparatus  │
└────┬─────┘                              └────────┬─────────┘
     │              605                            │
─────┴──────────────┬────────────────────────┬────┘
                    │                    604  │ ┌──────────────────┐
              ┌─────┴──────┐  601            └─┤ Output apparatus │
              │ Processor  │                   └──────────────────┘
              └────────────┘
```

Fig. 6